# EUROPEAN PATENT APPLICATION

(11) **EP 3 119 061 A1**
(43) Date of publication of application: **18.01.2017**
(21) Application number: 16179057.1
(22) Date of filing: 12.07.2016
(51) Int. Cl.: H04L 29/08

(54) **METHOD AND APPARATUS FOR CONTROLLING A DEVICE**

(30) Priority: 13.07.2015 CN 201510409114
(71) Applicant: Xiaomi Inc., Beijing 100085 (CN)
(72) Inventor: WANG, Yuanbo, Beijing 100085 (CN); CHEN, Hao, Beijing 100085 (CN); HOU, Enxing, Beijing 100085 (CN)
(74) Representative: Fontenelle, Sandrine

(57) **Abstract**

The present invention relates to a method and an apparatus for controlling a device, which belongs to the communication field. The method includes: obtaining (101) model identification information of a device to be controlled, wherein the model identification information is used for identifying a manufacturer and a device type of the device to be controlled; according to the model identification information, obtaining (102) a control interface for controlling a device of the device type manufactured by the manufacturer; and controlling (103) the device to be controlled via the control interface.

## Description

### TECHNICAL FIELD

The present invention generally relates to the communication field, and more particularly, to a method and an apparatus for controlling a device.

### BACKGROUND

The Internet of things is an internetworking for realizing connections between physical objects. All the electronic devices in a home may be connected to the Internet of things, in which a user may control respective electronic devices in a home via his/her mobile phone, and this brings great convenience to the user. For example, before the end of a business day, a user may control an air conditioning equipment in his/her home to be turned on in advance for cooling the home via his/her mobile phone, and thus the user will feel the cool in the home when he/she arrives at home.

A related technology provides a mobile phone application (APP) which includes a general control interface in which basic control functions of various devices are included. A user may open the general control interface of the APP via a mobile phone and thereby control various devices in his/her home via the general control interface.

### SUMMARY

In order to make further improvements in related technologies, embodiments of the present invention provide a method and an apparatus for controlling a device. The technical solutions are as follows.

According to a first aspect of embodiments of the present invention, there is provided a method for controlling a device. The method includes:
obtaining model identification information of a device to be controlled, wherein the model identification information is used for identifying a manufacturer and a device type of the device to be controlled;
according to the model identification information, obtaining a control interface for controlling a device of the device type manufactured by the manufacturer; and
controlling the device to be controlled via the control interface.

In a particular embodiment, obtaining the model identification information of the device to be controlled includes:
sending to a server a query instruction carrying a user account;
receiving device information sent by the server, wherein the device information includes model identification information of devices bound to the user account; and
obtaining the model identification information of the device to be controlled which is selected by a user from a device list, wherein the device list is used for displaying the received device information.

In a particular embodiment, obtaining a control interface for controlling a device of the device type manufactured by the manufacturer according to the model identification information, includes:
obtaining a control interface corresponding to the model identification information according to a correspondence between model identification information and control interfaces.

In a particular embodiment, the model identification information includes at least information on the manufacturer and information on the device type of the device to be controlled.

In a particular embodiment, the model identification information further includes information on a device model of the device to be controlled.

In a particular embodiment, the device information of devices bound to the user account sent by the server is determined by the server according to device information entered by the user, or is determined by the server according to received device information sent by the devices bound to the user account.

According to a second aspect of embodiments of the present invention, there is provided an apparatus for controlling a device. The apparatus includes:
a first obtaining module configured to obtain model identification information of a device to be controlled, wherein the model identification information is used for identifying a manufacturer and a device type of the device to be controlled;
a second obtaining module configured to, according to the model identification information, obtain a control interface for controlling a device of the device type manufactured by the manufacturer; and
a control module configured to control the device to be controlled via the control interface.

In a particular embodiment, the first obtaining module includes:
a sending unit configured to send to a server a query instruction carrying a user account;
a receiving unit configured to receive device information sent by the server, wherein the device information includes model identification information of devices bound to the user account; and
an obtaining unit configured to obtain the model identification information of the device to be controlled which is selected by a user from a device list, wherein the device list is used for displaying the received device information.

In a particular embodiment, the second obtaining module is configured to obtain a control interface corresponding to the model identification information according to a correspondence between model identification information and control interfaces.

In a particular embodiment, the model identification information includes at least information on the manufacturer and information on the device type of the device to be controlled.

In a particular embodiment, the model identification information further includes information on a device model of the device to be controlled.

In a particular embodiment, the device information of devices bound to the user account sent by the server is determined by the server according to device information entered by the user, or is determined by the server according to received device information sent by the devices bound to the user account.

According to a third aspect of embodiments of the present invention, there is provided an apparatus for controlling a device. The apparatus includes:
a processor; and
a memory for storing instructions executable by the processor;
wherein the processor is configured to perform:
obtaining model identification information of a device to be controlled, wherein the model identification information is used for identifying a manufacturer and a device type of the device to be controlled;
according to the model identification information, obtaining a control interface for controlling a device of the device type manufactured by the manufacturer; and
controlling the device to be controlled via the control interface.

According to a fourth aspect of embodiments of the present invention, there is provided a computer program, which when executing on a processor of an apparatus performs any one of the above methods.

The technical solutions provided by embodiments of the present invention may have the following advantageous effects:

A corresponding control interface is obtained according to model identification information of a device to be controlled. The model identification information is used for identifying a manufacturer and a device type of the device to be controlled, and the control interface is used for controlling various functions of a device of the device type manufactured by the manufacturer. Thus, various functions of the device to be controlled may be controlled via the control interface.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flowchart showing a method for controlling a device according to an exemplary embodiment;
Fig. 2-1 is a flowchart showing a method for controlling a device according to another exemplary embodiment;
Fig. 2-2 is a diagram schematically illustrating a display interface according to another exemplary embodiment;
Fig. 3 is a block diagram showing an apparatus for controlling a device according to another exemplary embodiment; and
Fig. 4 is a block diagram showing an apparatus for controlling a device according to another exemplary embodiment.

By the above drawings, specific embodiments of the present invention are shown, and more detailed description will be provided later. These drawings and literal descriptions are not for restricting the scope of the idea of the present invention in any manner but for illustrating the concept of the present invention to one of ordinary skill in this art with reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

An application (APP) may run on a mobile terminal. The application may be used for controlling devices and may include user interfaces for a user to perform operations, such as viewing, managing, controlling, on devices. Optionally, the application may further include user interfaces for a user to browse, collect or purchase the devices. Optionally, the user interfaces for a user to perform operations, such as viewing, managing, controlling, on devices may include a device list of devices. The device list of devices records information on devices which the user may operate, or which are possessed by the user (for example, information such as the names, brief introductions, operation status of the devices). Optionally, in embodiments of the present invention, the devices may be smart devices. For example, if a user manages an air purifier or a user possesses a smart air purifier, the air purifier may appear in a device list corresponding to an account of the user.

At present, a user may install an APP for controlling a device in a mobile terminal. The APP may include a general control interface corresponding to each device type. The general control interface corresponding to each device type may control basic functions corresponding to the device type, and the user may control the basic functions corresponding to the device type via the general control interface. For example, if the APP includes a general control interface corresponding to an air conditioning equipment, the general control interface may control basic functions of the air conditioning equipment, for example, turning on the refrigeration function of the air conditioning equipment and turning off the refrigeration function of the air conditioning equipment. The user may open the general control interface on the mobile terminal and turn on or off the refrigeration function of the air conditioning equipment via the general control interface.

However, for devices having the same device type, the devices manufactured by different manufacturers may have different device models, and devices having different device models may have different functions, for example, a device having a device model may possess an unique function to the device model in addition to basic functions corresponding to the device type, but the general control interface cannot control the unique function. Thus, a user cannot control the unique function. For example, a manufacturer produces air conditioning equipment of a certain model which has a unique function of air purifying, and however the general control interface of the air conditioning equipment can only control the functions of turning on and off the refrigeration function of the air conditioning equipment but cannot control the unique function, for example, turning on or off the air purifying function of the air conditioning equipment, and thus a user cannot control the air purifying function via the general control interface .

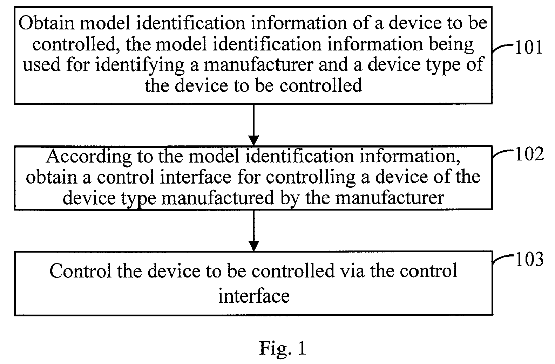

Fig. 1 is a flowchart showing a method for controlling a device according to an exemplary embodiment. The method may include the following steps.

In step 101, model identification information of a device to be controlled is obtained. The model identification information is used for identifying a manufacturer and a device type of the device to be controlled.

In step 102, a control interface for controlling a device of the device type manufactured by the manufacturer is obtained according to the model identification information.

In step 103, the device to be controlled is controlled via the control interface.

In embodiments of the present invention, a corresponding control interface is obtained according to model identification information of a device to be controlled. The model identification information is used for identifying a manufacturer and a device type of the device to be controlled, and the control interface is used for controlling various functions of a device of the device type manufactured by the manufacturer. Thus, various functions of the device to be controlled may be controlled via the control interface.

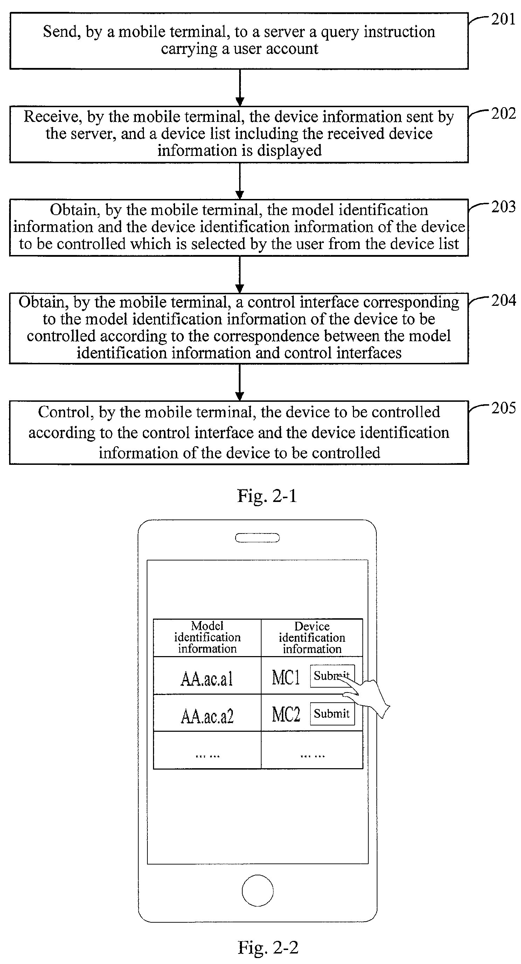

Fig. 2-1 is a flowchart showing a method for controlling a device according to another exemplary embodiment. The present embodiment may be performed by a mobile terminal, which may be a mobile phone, a tablet computer or a Personal Digital Assistant (PDA), a handheld computer and the like.

In the present embodiment, the mobile terminal may obtain the control interfaces of respective devices and thereby control respective devices via respective control interfaces. The Microcontroller Unit (MCU) of each device may include a model field. The model field in the MCU of each device is configured to store model identification information of the device. The model identification information includes at least information on the manufacturer of the device and information on the device type of the device, i.e., the model identification information is used for identifying the manufacturer and the device type of the device. The model identification information may further include information on a device model of the device, i.e., the model identification information is further used for identifying the device model of the device. The information on the manufacturer of the device may be the name of the manufacturer, and the like. For example, for an air conditioning equipment, the model identification information of the air conditioning equipment may be AA. ac. al, where AA represents the information on the manufacturer of the air conditioning equipment, ac represents the information on the device type of the air conditioning equipment, i.e., the information on the device type is an air conditioner equipment, and al represents the information on the device model of the air conditioning equipment. The model identification information AA. ac. a1 indicates that the device is an air conditioning equipment manufactured by the manufacturer AA, and the device model of the air conditioning equipment is a1.

For each device, during connection of the device with a server, the device may send device description information to the server. The device description information may include a user account bound to the device and device information of the device. The device information includes the model identification information stored in the model field of the device and device identification information of the device, and may further include one or more of the name of the device, the manufacturer of the device, the device type, the operation status of the device and the like. The server receives the device description information sent from the device, stores device information included in the device description information in the device information list corresponding to the user account. The device identification information of the device may be a Media Access Control (MAC) address or an Internet Protocol (IP) address and the like of the device.

For example, for the above air conditioning equipment, during connection of the air conditioning equipment with a server, the air conditioning equipment sends device description information to the server. The device description information includes a user account ID1 bound to the air conditioning equipment and device information of the air conditioning equipment. The device information includes the model identification information AA. ac. a1 of the air conditioning equipment and the device identification information MAC1 of the air conditioning equipment. The server receives the device description information, obtains a corresponding device information list according to the user account ID1 included in the device description information. The device information list is configured to store device information of devices bound to the user account ID1. Then, the server stores the device information of the air conditioning equipment included in the device description information into the device information list as shown in Table 1, i.e., the model identification information AA. ac. a1 and the device identification information MAC1 included in the device information are stored in the device information list as shown in Table 1

**Table 1**

| Model identification information | Device identification information |
|---|---|
| AA. ac. a1 | MAC1 |
| AA. ac. a2 | MAC2 |
| ... | ... |

An APP for controlling devices is installed in a mobile terminal. The APP includes a correspondence between model identification information and control interfaces. The correspondence between model identification information and control interfaces includes model identification information and control interfaces corresponding to various devices manufactured by different manufacturers. In the correspondence between model identification information and control interfaces, for certain model identification information, if the model identification information includes information on a manufacturer and information on a device type, the control interface corresponding to the model identification information is dedicated to controlling of devices of the device type manufactured by the manufacturer; if the model identification information further includes information on a device model, the control interface corresponding to the model identification information is dedicated to controlling of devices having the device model which are manufactured by the manufacturer and are of the device type.

For example, referring to the correspondence between model identification information and control interfaces as shown in Table 2, the correspondence is established in advance by technicians and stored in a server. Each time when a manufacturer develops a device of a device model, the technicians create a control interface corresponding to the developed device, and the control interface may control all the functions of the developed device. The technicians store the model identification information and the control interface of the developed device in a correspondence between model identification information and control interfaces. A mobile terminal may download the correspondence between model identification information and control interfaces from a server on an irregular basis to update the correspondence between model identification information and control interfaces stored in itself.

In the correspondence between model identification information and control interfaces as shown in Table 2, the control interface 1 corresponding to the model identification information AA. ac. a1 is dedicated to controlling of air conditioning equipments having a device model a1 manufactured by a manufacturer AA, and the control interface 2 corresponding to the model identification information AA. ac. a2 is dedicated to controlling of air conditioning equipments having a device model a2 manufactured by the manufacturer AA.

**Table 2**

| Model identification information | Control interface |
|---|---|
| AA. ac. a1 | Control interface 1 |
| AA. ac. a2 | Control interface 2 |
| ... | ... |

Referring to Fig. 2-1, the above method may include:
In step 201, a mobile terminal sends to a server a query instruction carrying a user account.

The user account is included in the mobile terminal. When a user wants to perform control on a device bound to the user account of himself/herself, the user may start an APP for controlling devices installed on a mobile terminal, and the mobile terminal sends a query instruction carrying the user account to a server. The server receives the query instruction, and obtains corresponding device information according to the user account carried in the query instruction. The device information includes model identification information and device identification information of devices bound to the user account, and may further include one or more of the names, manufacturers, types, operation status of the devices and the like, and then the device information is sent to the motile terminal.

For example, after the user starts the APP for controlling devices on the mobile terminal, the mobile terminal obtains the user account ID1, sends to the server a query instruction carrying the user account ID1. The server receives the query instruction, obtains the device information included in the corresponding Table 1 according to the user account ID1 carried in the query instruction and sends the device information to the mobile terminal.

In step 202, the mobile terminal receives the device information sent by the server, displays a device list including the received device information.

In step 202, the device information includes the model identification information and the device identification information of devices. After the mobile terminal displays the device information to the user, the user may select a certain device which he/she wants to control from the device list showing the device information, obtains the model identification information and the device identification information of the device and submits them to the mobile terminal.

For example, the mobile terminal receives the device information as shown in Table 1 sent from the server, displays a device list including the received device information (see Fig. 2-2). The device list may show one or more of the device information, such as the names, the identifications, the model identification information, the manufacturers, the types, the device model information, the operation status of the devices bound to the user account. In the displayed device list, the device information of each device further corresponds to a submission button, and the user may tap the submission button corresponding to a certain device to submit the model identification information and the device identification information of the device to the mobile terminal as the model identification information and the device identification information of the device to be controlled. If the user taps the first submission button in the device list, the model identification information AA. ac. a1 and the device identification information MAC1 are submitted to the mobile terminal.

In step 203, the mobile terminal obtains the model identification information and the device identification information of the device to be controlled which is selected by the user from the device list.

For example, the mobile terminal obtains the model identification information and the device identification information of the device to be controlled which is selected by the user from the device list in Fig. 2-2 as AA. ac. a1 and MAC1.

In step 204, the mobile terminal obtains a control interface corresponding to the model identification information of the device to be controlled according to the correspondence between the model identification information and control interfaces.

For example, the mobile terminal obtains a corresponding control interface 1 from the correspondence between model identification information and control interfaces as shown in Table 2 according to the model identification information AA. ac. a1.

In step 205, the mobile terminal controls the device to be controlled according to the control interface and the device identification information of the device to be controlled.

The control interface may include control ports for controlling various functions of the device to be controlled. A user may trigger a control instruction to the mobile terminal by a control port for a certain function in the control interface, and the mobile terminal sends a control instruction to the device to be controlled according to the device identification information of the device to be controlled so as to make the device to be controlled perform the control instruction.

In embodiments of the present invention, if the model identification information includes information on a manufacturer and information on a device type, the control interface corresponding to the model identification information is dedicated to controlling of devices of the device type manufactured by the manufacturer, and the control interface may control all the functions of the devices of the device type manufactured by the manufacturer; if the model identification information further includes information on a device model, the control interface corresponding to the model identification information is dedicated to controlling of devices having the device model, and the control interface may control all the functions of the device of the device model. Thus, when a mobile terminal is controlling a device, a control interface dedicated to controlling of the device may be obtained according to the model identification information of the device, and all the functions of the device may be controlled via the control interface.

The following are embodiments of the apparatus of the present invention which may be configured to perform embodiments of the method of the present invention. For the undisclosed details of the embodiments of the apparatus of the present invention, the previously mentioned embodiments of the method of the present invention may be referred to.

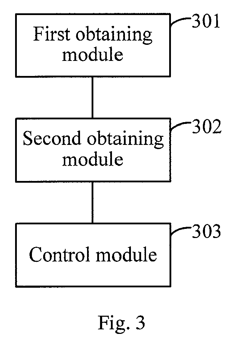

Fig. 3 is a block diagram showing an apparatus for controlling a device according to another exemplary embodiment. The apparatus may include:
a first obtaining module 301 configured to obtain model identification information of a device to be controlled, wherein the model identification information is used for identifying a manufacturer and a device type of the device to be controlled;
a second obtaining module 302 configured to, according to the model identification information, obtain a control interface for controlling a device of the device type manufactured by the manufacturer; and
a control module 303 configured to control the device to be controlled via the control interface.

In a particular embodiment, the first obtaining module 301 includes:
a sending unit configured to send to a server a query instruction carrying a user account;
a receiving unit configured to receive device information sent by the server, wherein the device information includes model identification information of devices bound to the user account; and
an obtaining unit configured to obtain the model identification information of the device to be controlled which is selected by a user from a device list, wherein the device list is used for displaying the received device information.

In a particular embodiment, the second obtaining module 302 is configured to obtain a control interface corresponding to the model identification information according to a correspondence between model identification information and control interfaces.

In a particular embodiment, the model identification information includes at least information on the manufacturer and information on the device type of the device to be controlled.

In a particular embodiment, the model identification information further includes information on a device model of the device to be controlled.

In a particular embodiment, the device information of devices bound to the user account sent by the server is determined by the server according to device information entered by the user, or is determined by the server according to received device information sent by the devices bound to the user account.

In embodiments of the present invention, a corresponding control interface is obtained according to model identification information of a device to be controlled. The model identification information is used for identifying a manufacturer and a device type of the device to be controlled, and the control interface is used for controlling various functions of a device of the device type manufactured by the manufacturer. Thus, various functions of the device to be controlled may be controlled via the control interface.

The specific manners for respective modules performing operations in the above apparatus of the embodiments have been described in the embodiments relating to the methods, and a duplicate description is omitted herein.

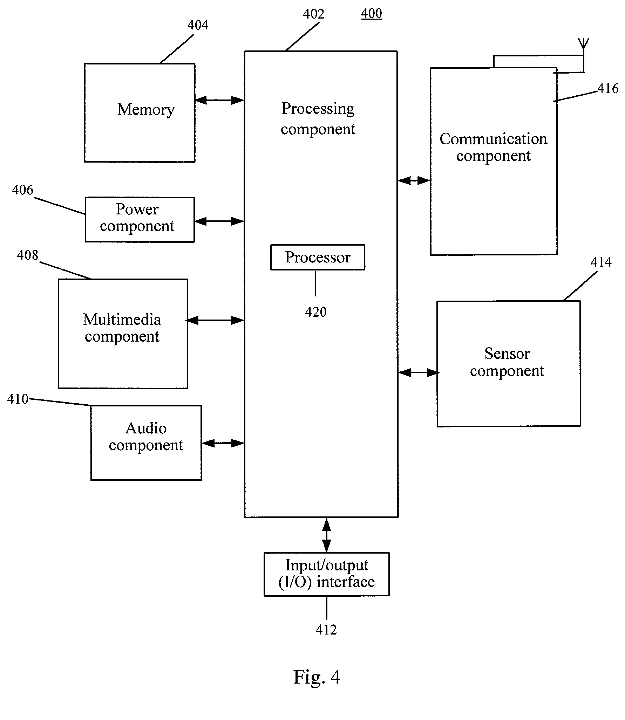

Fig. 4 is a block diagram showing an apparatus 400 for controlling a device according to another exemplary embodiment. For example, the apparatus 400 may be a mobile phone, a computer, a digital broadcast terminal, a messaging device, a gaming console, a tablet, a medical device, exercise equipment, a personal digital assistant, and the like.

Referring to Fig. 4, the apparatus 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the apparatus 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the apparatus 400. Examples of such data include instructions for any applications or methods operated on the apparatus 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the apparatus 400. The power component 406 may include a power management system, one or more power sources, and any other components associated with the generation, management, and distribution of power in the apparatus 400.

The multimedia component 408 includes a screen providing an output interface between the apparatus 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and the rear camera may receive an external multimedia datum while the apparatus 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the apparatus 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the apparatus 400. For instance, the sensor component 414 may detect an open/closed status of the apparatus 400, relative positioning of components, e.g., the display and the keypad, of the apparatus 400, a change in position of the apparatus 400 or a component of the apparatus 400, a presence or absence of user contact with the apparatus 400, an orientation or an acceleration/deceleration of the apparatus 400, and a change in temperature of the apparatus 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communication, wired or wirelessly, between the apparatus 400 and other devices. The apparatus 400 can access a wireless network based on a communication standard, such as WiFi, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 404, executable by the processor 420 in the apparatus 400, for performing the above-described methods. For example, the non-transitory computer-readable storage medium may be a ROM, a RAM, a CD-ROM, a magnetic tape, a floppy disc, an optical data storage device, and the like.

There is also provided a non-transitory computer-readable storage medium. When instructions in the storage medium are executed by a processor of the apparatus 400, the apparatus 400 may be caused to perform a method for controlling a device. The method may include:
obtaining model identification information of a device to be controlled, wherein the model identification information is used for identifying a manufacturer and a device type of the device to be controlled;
according to the model identification information, obtaining a control interface for controlling a device of the device type manufactured by the manufacturer; and
controlling the device to be controlled via the control interface.

In a particular embodiment, obtaining the model identification information of the device to be controlled includes:
sending to a server a query instruction carrying a user account;
receiving device information sent by the server, wherein the device information includes model identification information of devices bound to the user account; and
obtaining the model identification information of the device to be controlled which is selected by a user from a device list, wherein the device list is used for displaying the received device information.

In a particular embodiment, obtaining a control interface for controlling a device of the device type manufactured by the manufacturer according to the model identification information, includes:
obtaining a control interface corresponding to the model identification information according to a correspondence between model identification information and control interfaces.

In a particular embodiment, the model identification information includes at least information on the manufacturer and information on the device type of the device to be controlled.

In a particular embodiment, the model identification information further includes information on a device model of the device to be controlled.

In a particular embodiment, the device information of devices bound to the user account sent by the server is determined by the server according to device information entered by the user, or is determined by the server according to received device information sent by the devices bound to the user account.

In embodiments of the present invention, a corresponding control interface is obtained according to model identification information of a device to be controlled. The model identification information is used for identifying a manufacturer and a device type of the device to be controlled, and the control interface is used for controlling various functions of a device of the device type manufactured by the manufacturer. Thus, various functions of the device to be controlled may be controlled via the control interface.

Other embodiments of the present invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for controlling a device, comprising:
obtaining (101) model identification information of a device to be controlled, wherein the model identification information is used for identifying a manufacturer and a device type of the device to be controlled;
according to the model identification information, obtaining (102) a control interface for controlling a device of the device type manufactured by the manufacturer; and
controlling (103) the device to be controlled via the control interface.

2. The method according to claim 1, wherein obtaining (101) the model identification information of the device to be controlled comprises:
sending (201) to a server a query instruction carrying a user account;
receiving (202) device information sent by the server, wherein the device information comprises model identification information of devices bound to the user account; and
obtaining (203) the model identification information of the device to be controlled which is selected by a user from a device list, wherein the device list is used for displaying the received device information.

3. The method according to claim 1 or 2, wherein obtaining (102) a control interface for controlling a device of the device type manufactured by the manufacturer according to the model identification information, comprises:
obtaining (204) a control interface corresponding to the model identification information according to a correspondence between model identification information and control interfaces.

4. The method according to any one of claims 1 to 3, wherein the model identification information comprises at least information on the manufacturer and information on the device type of the device to be controlled.

5. The method according to claim 4 wherein the model identification information further comprises information on a device model of the device to be controlled.

6. The method according to any one of claims 1 to 5, wherein the device information of devices bound to the user account sent by the server is determined by the server according to device information entered by the user, or is determined by the server according to received device information sent by the devices bound to the user account.

7. An apparatus for controlling a device, comprising:
a first obtaining module (301) configured to obtain model identification information of a device to be controlled, wherein the model identification information is used for identifying a manufacturer and a device type of the device to be controlled;
a second obtaining module (302) configured to, according to the model identification information, obtain a control interface for controlling a device of the device type manufactured by the manufacturer; and
a control module (303) configured to control the device to be controlled via the control interface.

8. The apparatus according to claim 7, wherein the first obtaining module (301) comprises:
a sending unit configured to send to a server a query instruction carrying a user account;
a receiving unit configured to receive device information sent by the server, wherein the device information comprises model identification information of devices bound to the user account; and
an obtaining unit configured to obtain the model identification information of the device to be controlled which is selected by a user from a device list, wherein the device list is used for displaying the received device information.

9. The apparatus according to claim 7 or 8, wherein the second obtaining module (302) is configured to obtain a control interface corresponding to the model identification information according to a correspondence between model identification information and control interfaces.

10. The apparatus according to any one of claims 7 to 9, wherein the model identification information comprises at least information on the manufacturer and information on the device type of the device to be controlled.

11. The apparatus according to claim 10, wherein the model identification information further comprises information on a device model of the device to be controlled.

12. The apparatus according to any one of claims 7 to 11, wherein the device information of devices bound to the user account sent by the server is determined by the server according to device information entered by the user, or is determined by the server according to received device information sent by the devices bound to the user account.

13. An apparatus (400) for controlling a device, comprising:
a processor (402); and
a memory (404) for storing instructions executable by the processor;
wherein the processor (402) is configured to perform a method for controlling the device according to any of claims 1 to 6

14. A computer program, which when executing on a processor of an apparatus, performs a method according to any one of claims 1 to 6.
